Europäisches Patentamt

European Patent Office

Office européen des brevets

(11) Publication number: **0 089 467**
**B1**

(12) # EUROPEAN PATENT SPECIFICATION

(45) Date of publication of patent specification: **23.04.86**

(51) Int. Cl.⁴: **H 04 L 25/49**

(21) Application number: **83100759.6**

(22) Date of filing: **27.01.83**

(54) Method and system for pulse signal transmission.

(30) Priority: **19.03.82 JP 42763/82**

(43) Date of publication of application:
**28.09.83 Bulletin 83/39**

(45) Publication of the grant of the patent:
**23.04.86 Bulletin 86/17**

(84) Designated Contracting States:
**DE FR GB IT NL SE**

(56) References cited:
**EP-A-0 013 990**

**INTERNATIONAL CONFERENCE ON
COMMUNICATIONS, June 10-14, 1979,
BOSTON, MA, CONFERENCE RECORD, vol.
4, pages 53.2.1-53.2.5, IEEE cat. no. 79CH1435-7
CSCB, New York, US Y. TAKASAKI et al.:
"Optical pulse formats for long wavelength
fiber optic digital transmission"**

(73) Proprietor: **Hitachi, Ltd.
5-1, Marunouchi 1-chome
Chiyoda-ku Tokyo 100 (JP)**

(72) Inventor: **Yoshine, Hiroki
2-14-5, Tsukushino
Machida-shi Tokyo (JP)**
Inventor: **Takasaki, Yoshitaka
5-12-12, Nakaarai
Tokorozawa-shi Saitama-ken (JP)**
Inventor: **Tkahashi, Yasushi
2-32, Koyasu-cho
Hachioji-shi Tokyo (JP)**
Inventor: **Yamada, Mitsuo
4-588-17, Tomoda-machi
Ohme-shi Tokyo (JP)**
Inventor: **Nagano, Katsuyuki
Sanhaitsumusashino B-203 3-10-1, Shinmeidai
Hamura-cho Nishitama-gun Tokyo (JP)**

(74) Representative: **Patentanwälte Beetz sen. -
Beetz jun. Timpe - Siegfried - Schmitt-Fumian
Steinsdorfstrasse 10
D-8000 München 22 (DE)**

Courier Press, Leamington Spa, England.

(56) References cited:
**NACHRICHTENTECHNIK ELEKTRONIK, vol. 31, no. 9, 1981, pages 356-362, East Berlin, DD B. KAUFHOLD: "Auswahl des Leitungscodes bei PCM-Übertragung auf Koaxialkabel"**

**INTERNATIONAL CONFERENCE ON COMMUNICATIONS, June 16-18, 1975, San francisco, conference record vol. II, IEEE cat. no. 75 CH0 971-2 CSCB, pages 32-20 to 32-24, New York, US Y. TAKASAKI et al.: "Line coding plans for fiber optic communication systems"**

## Description

Background of the invention
(1) Field of the invention:

The present invention relates to a method and a system for pulse signal transmission. More particularly, it relates to a method and a system for pulse signal transmission wherein a binary signal of "1" and "0" is converted into a pulse signal, in which one-code has its polarity inverted at a fixed period T and the other code at a fixed period T/2, and then the pulse signal is transmitted. Especially, it relates to the arrangements of signal converter circuits in transmitting and receiving parts.

(2) Description of the prior art:

In case of transmitting a pulse signal, it is desired, for the arrangement of a transmission line as well as circuit devices, that the transmission pulse signal is D.C.-balanced and that timing information can be extracted easily. Further, in the usage of optical communication etc., two-level transmission pulses are desirable from the viewpoint of the nonlinearity of a light source.

A method according to the preamble of claim 1 has been known from the International Conference on Communications, June 10—14, 1979, Boston, MA, Conference Record, vol. 4, pages 53.2.1—53.2.5, IEEE cat. No. 79CH1435-7 CSCB, New York,- Y. Takasaki et al: "Optical pulse formats for long wavelength fiber optic digital transmission" which uses a pulse signal in which one of the original binary information of "0" and "1" is encoded into "11" or "00" and the other into "01" or "10", in other words, one is converted into alternate polarities at a period T and the other at a period T/2 (hereinbelow, the pulse signal shall be called the "two-level AMI (Alternate Mark Inversion) signal"). As compared with conventional three-level bipolar codes, the two-level AMI codes become $\frac{1}{2}$ in the transmission pulse period, namely, two times in the timing frequency, and become two times in the transmission speed (bandwidth) required of a transmitter and receiver. It is therefore unfavorable when the clock rate of the original information signal is high (for example, 100 Mb/s or above).

As a measure for eliminating this problem, the two-level AMI signal is subjected to duobinary-shaping processing in a receiving part. This processing is performed with a low-pass filter whose frequency characteristic is cosine-shaped. Equivalently, the filter has the effect of adding the two-level AMI signal and a signal obtained by delaying this two-level AMI signal by $\frac{1}{2}$T. A waveform after the processing becomes the three-level bipolar signal. Since the duobinary shaped signal arises at the same clock rate T as that of the original information signal, it has the advantage that the transmission band becomes $\frac{1}{2}$ of that in the case of transmitting the two-level AMI signal as it is. However, it has the disadvantage that, when information "0's" succeed in the original information, a stable timing signal cannot be effectively extracted. The EP—A—13990 discloses the use of zero substitution techniques in two level AMI coding systems. However, the code rule used in AMI code in the document is different from the code rule of the present application. Therefore, the duobinary shaping cannot be used in the circuit disclosed in the EP—A—13990.

In the case of the three-level AMI signal, when such information "0's" have succeeded, a method (hereinbelow, called the "zero substitution method") is sometimes relied on wherein the successive "0's" information are substituted by a waveform pattern which does not conform with a specified AMI law and which is transmitted, and on the receiving side, the waveform pattern is utilized as timing information, and besides, the part substituted by the specified pattern is reconverted into the "0's" succession signal of the original information. The method, however, cannot be applied to the case of the two-level AMI signal. More specifically, even when the zero succession part is substituted on the transmitting side by a special pattern which does not conform with the code conversion rules of the two-level AMI signal, undefined pulses arise in the duobinary-shaped three-level AMI signal. It is therefore difficult to properly decide the zero substitution part and to properly convert this part into the zero succession signal of the original information.

Summary of the invention

It is accordingly an object of the present invention to realize a method and a system for pulse signal transmission using a two-level AMI signal, wherein even when the succession of "0's" arises in an original information signal, a receiving part can properly extract a timing signal and can precisely regenerate the orginal information pulses without widening the transmission band.

To solve the above object in a code signal transmission system having a transmitting part which converts "1" of an orginal information signal into "11" or "00" and "0" into "01" or "10", or "1" into "10" or "01" and "0" into "11" or "00", in a manner that polarities of pulses are alternately inverted, and which delivers the converted signal to a transmission line, and a receiving part which subjects a reception signal received from the transmission line, to duobinary shaping and which regenerates the original signal from a duobinary shaped signal of three levels of "+1", "0" and "−1", the method for pulse signal transmission according to the invention is characterized in that in this transmitting part when "0" (or "1's") have succeeded over a fixed bit length in the original information signal, the original information signal is converted into pulses containing "11" or "00" inphase with or antiphase to "0" (or "1") thereof so that a number of the inphase pulse may become equal or larger than the number of the antiphase pulses and so that when both are equal, the number of the inphase pulses adjacent to each other may become larger than the number of the antiphase pulses adjacent to each other, and that in the received pulses the zero substitution part from the inphase or antiphase pulse arrayal of the duobinary shaped signal is detected and the part subjected to the zero substitution is converted into "0's".

The claims 2 and 3 characterize advantageous embodiments thereof.

The object is solved in a system according to the preamble of claim 4 by the characterizing features of claim 4.

The claims 5 and 6 characterize advantageous embodiments thereof.

In the above construction, the expressions "inphase" and "antiphase" shall be construed as follows. As will be stated later, the polarities of pulses are inverted at respective time slots in the two-level AMI signal. Herein, the code whose polarity changes at the boundary of the time slots is "inphase", whereas the code whose polarity remains unchanged at the boundary of the time slots is "antiphase". According to the above construction, since the inphase two-level AMI code exists in the zero succession part, a pulse inphase with a timing signal is generated also in the duobinary shaped signal. Besides, since the antiphase two-level AMI code is included, the property of the normal duobinary-shaped three-level AMI signal that the polarities are alternately inverted is removed, and hence, it can be readily decided that the substitution of the pulse train for the "0" succession has been conducted there.

The above-mentioned and other objects and features of this invention will become more apparent by reference to the following description taken in conjunction with the accompanying drawings.

Brief description of the drawings

Figure 1 is a diagram showing the general arrangement of an embodiment of a pulse signal transmission system according to the present invention;

Figure 2 is a waveform diagram for explaining a two-level AMI signal and a duobinary shaped signal;

Figures 3 and 9 are waveform diagrams for explaining the principles of operations in embodiments of the present invention;

Figures 4 and 7 are circuit diagrams each showing the arrangement of an embodiment of a transmitting part which is performed in the pulse signal transmission system according to the present invention;

Figures 5 and 10 are time charts for explaining the operations of the circuits of Figure 4 and Figure 7, respectively; and

Figures 6 and 8 are diagrams each showing an embodiment of a zero substitution remover in a receiving part in the pulse signal transmission system according to the present invention.

Detailed description of the preferred embodiments

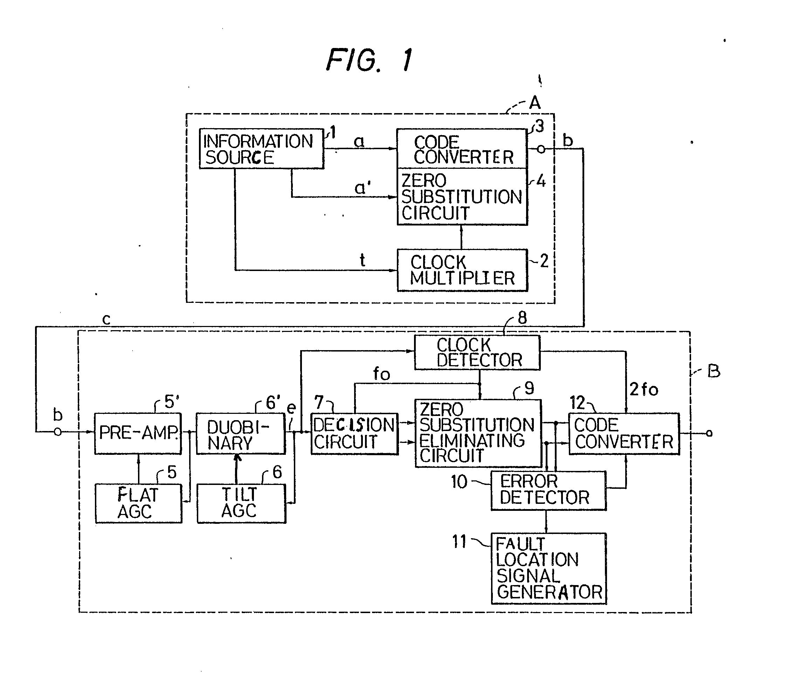

Figure 1 is a block diagram showing the general arrangement of an embodiment of a pulse signal transmission system according to the present invention. Referring to the figure, in a transmitting part A, a pulse signal $a$ composed of ordinary binary signals of "1" and "0" and having a fixed period T is generated by an information signal source 1 and is converted into a two-level AMI signal $b$ by a code converter 3. When, in the information signal, the information of "0" have succeeded by at least a predetermined number, a detection signal $a'$ is generated, and it operates a zero substitution imparter 4 so as to execute a code conversion different from one in the usual case. A clock multiplier 2 multiplies a clock (timing) signal $t$ used for the original signal, and the multiplied signal is applied to the code converter 3 as well as the zero substitution imparter 4.

In a receiving part B, the received signal $b$ is amplified into a signal of fixed amplitude by a pre-amplifier 5' which is subjected to a flat automatic gain control (AGC) 5, whereupon the amplified signal is turned into a duobinary shaped signal $e$ by a duobinary shaping circuit 6'. In this case, the distortion of the signal attributed to the frequency characteristic of a transmission line in compensated by a tilt automatic gain control (AGC) circuit 6. The duobinary shaping circuit is constructed so as to also have the function of a roll-off filter (a low-pass filter for removing a high frequency component). A decision circuit 7 compares the duobinary shaped signal with a threshold value, to individually deliver plus and minus pulses to a zero substitution remover 9. The zero substitution remover 9 removes a regenerated signal resulting from the zero substitution, and its output is partly applied to a code converter 12 and partly to an error detector 10. The detected result of a code error by the error detector is partly applied to the code converter 12 so as to modify a decoded signal. Another part of the detected result is sometimes transmitted to a terminal station through a fault location signal generator 11 in order to clarify an error position. Further, in case of using the receiving part as a repeater, the detected result is converted by the code converter 12 into a 2-level AMI code, which is delivered to the next transmission line. A clock extractor 8 prepares clock signals as timing signals synchronous with the transmitted signal, in such a way that a resonator having a resonance frequency equal to a bit rate is excited by the duobinary signal $e$. The clock signals are applied to the decision circuit 7, the zero substitution remover 9 and the code converter 12 as such.

In the above arrangement, the characterizing features of the present invention are principally concerned with the portions of the zero substitution imparter 4, decision circuit 7 and zero substitution remover 9. Since the other portions have

**0 089 467**

hitherto been known, the detailed description thereof shall be omitted.

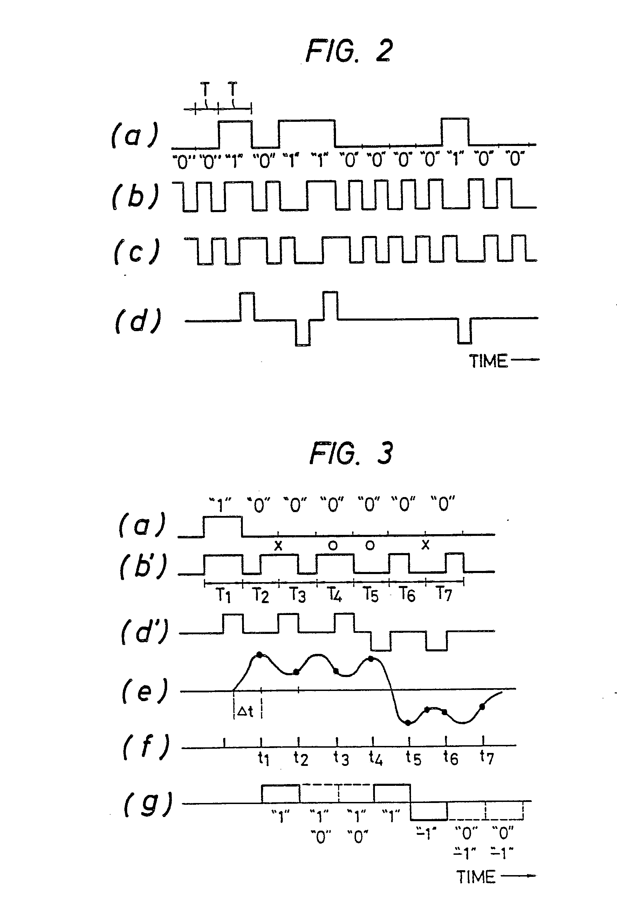

Figure 2 is a waveform diagram for explaining the 2-level AMI code and the duobinary shaping.

In the Figure, (a) indicates the original information signal which consists of the binary signals of "1" and "0" and which has the fixed period T (clock rate). (b) indicates the 2-level AMI signal into which the signal *a* has been converted. "1" of the original information has the polarity (level) kept identical during a time slot and changed at the boundary of time slots, while "0" of the original information has the polarity inverted every ½T of a time slot. (d) indicates the duobinary shaped signal, which has a waveform similar to one resulting from the addition between the signal (b) and a signal (c) obtained by delaying the signal (b) by T/2 (for example, the addition wherein the level of "0" is assumed −0.5 and that of "1" +0.5). As apparent from (d), the duobinary shaped signal has pulses generated in the places of the original information "1" and with alternate polarities, similarly to the so-called bipolar code. Accordingly, when a signal obtained through the full-wave rectification of the signal (d) is used for exciting the resonator having the resonance frequency 1/T, the timing (clock) signal can be readily extracted, however, when "0's" have succeeded in the original information, no pulse appears in the duobinary shaped signal. In the prior-art pulse transmission system, therefore, a case occurs where the timing signal cannot be extracted.

Figure 3 is a waveform diagram for explaining the principle of the present invention. In the figure, (a) indicates the original information signal, as to which the zero substitution is conducted when six "0's" have followed "1". A signal (b') does not conform with the normal 2-level AMI signal conversion rules. Polarities are not changed at the boundary of the second and third time slots $T_2$, $T_3$ and the boundary of the sixth and seventh time slots $T_6$, $T_7$ (with marks × attached). In each of the fourth and fifth time slots $T_4$, $T_5$ (with marks ○ attached), the same polarity is held as in the case of "1" in spite of the original information being "0". The part in which the two-level AMI signal corresponding to the succession of a certain number of "0's" is converted into the two-level signals not conforming with the normal rules in this manner, shall be called the "zero substitution". In addition, pulses of widths T (including plus and minus pulses) at the mark × and at the mark ○ shall be respectively called the "pulses inphase with and antiphase to the original information". Further, the conversion effected at the mark × shall be called the "violation".

(d') indicates the duobinary shaped signal of the signal (b'). That is, it is obtained by adding the signal (b') and a signal with this signal (b') delayed by T/2. Actually, the duobinary shaped signal becomes a signal in a dull waveform and with a time delay ΔT as shown at (e), on account of transmission characteristics. This signal is sampled at timings (period T) shown at (f), compared with a threshold value, and waveshaped. Then, a waveform as shown at (g) is obtained.

Accordingly, the duobinary shaped signal (e) produces pulses in the part where the original information "0's" succeed. Therefore, it can detect the levels of the input signal and can be used as the control signal of the AGC. Further, since the pulses having peak values develop at the sampling points $t_4$ and $t_5$, the timing signal is easily extracted. That is, when the resonator is excited by the pulses having the peaks at $t_4$ and $t_5$, it is effectively excited.

In the waveform (e), however, the pulses at the positions of the violation become antiphase and act to cancel the timing signal because of the peak values lying midway between the sampling points. Since, however, the inphase pulses arising at $t_4$ and $t_5$ are adjacent to each other, they have the effect of emphasizing the timing component, so that the timing signal is not lost in spite of equal numbers of the inphase and antiphase pulses. In addition, the positions of the regenerated waveform (g) at the points of time $t_2$ and $t_3$ are undefined as to whether they are "0" or "+1". Also, the positions of the regenerated waveform at the points of time $t_6$ and $t_7$ are undefined as to whether they are "0" or "−1". (Such undefined parts are indicated by dotted lines).

The aforementioned pulses generated by the zero substitution are unnecessary as information, and they must be discriminated and removed on the receiving side. In the present invention, the zero substitution part is decided and removed by utilizing the properties of the regenerated waveform (g) and the two-level AMI signal. In the case of Figure 3, when the undefined pulses to become "0" or "+1" are denoted by $\phi_+$, and the undefined pulses to become "0" or "−1" are denoted by $\phi_-$, the signal of the succession of the six "0's" becomes "$\phi_+$, $\phi_+$, 1, −1, $\phi_-$, $\phi_-$". necessarily. It is predicted to be based on the zero substitution, from this signal pattern. However, there is the possibility that the signal part conforms with the AMI law (for example, "0, 0, 1, −1, 0, 0" at $\phi_+=\phi_-=0$). In order to distinguish them, the invention utilizes the property of the duobinary shaped signal of the two-level AMI signal, that is, the property that "+1" and "−1" arise alternately. In the case of Figure 3, "1" exists before the succession of "0's". The signal part can therefore be decided as the regenerated signal based on the zero substitution, because $\phi_+$ cannot become −1 in "1, $\phi_+$, $\phi_+$, 1, −1, $\phi_-$, $\phi_-$". When the part "$\phi_+$, $\phi_+$, +1, −1, $\phi_-$, $\phi_-$" is converted into "0, 0, 0, 0, 0, 0", the removal of the zero substitution is realized.

Although the above description has referred to the example wherein the zero substitution is executed when the mix "0's" succeed in the original information, the present invention is not restricted to the example but is also applicable to cases of executing the zero substitution of a succession of seven or more "0's" as indicated in an embodiment to be described later. In those cases, the zero substitution part can be decided without considering the regenerated signal of the preceding original information "1" as will be described later.

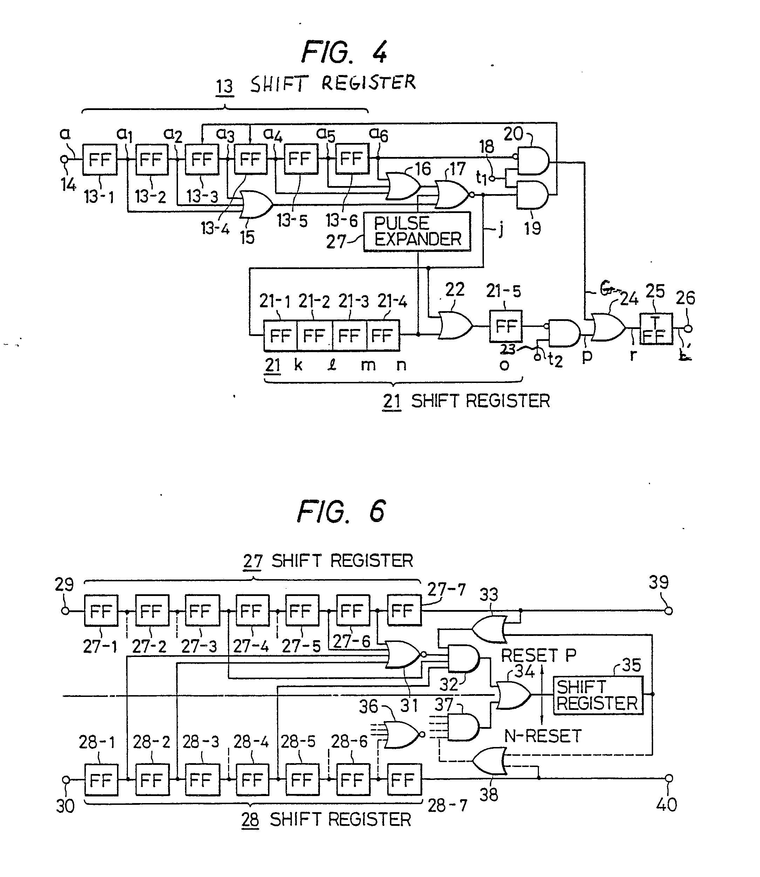

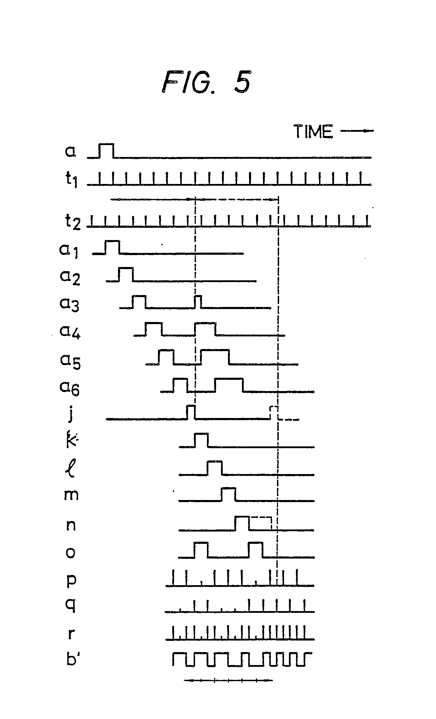

Figure 4 is a diagram showing the arrangement of an embodiment of the transmitting part in Figure 1, while Figure 5 is a time chart for explaining the operation of the embodiment. The zero substitution in the present embodiment for the succession of "0's" is executed in conformity with the rules illustrated in Figure 3.

In order to facilitate the explanation of the operation, the original information signal $a$ is assumed to be a pulse signal wherein the first value is "1" after which "0's" succeed. The signal $a$ is applied to the input terminal 14 of a shift register 13 in which flip-flop circuits are connected in six stages (13-1 to 13-6) and which is operated by a clock signal $t_2$ having a period T. With the lapse of time, the output waveforms of the respective stages become as shown at $a_1$—$a_6$ in Figure 5. The succession of six "0's" in the original information can be detected by obtaining the logical sum (OR) of the outputs of the respective stages of the shift register 13. More specifically, the output of OR gates 15 and 16 are applied to a NOR gate 17, whereby the output $j$ of the NOR gate 17 becomes "1" when the mix "0's" have succeeded in the original information. When, after the generation of the output signal, the pulse of a clock signal $t_1$ (having a period T and shifting by T/2 with respect to the clock signal $t_2$) which is applied to an input terminal 18 has arrived, the third and fourth stages of flip-flops 13-3 and 13-4 of the shift register 13 are set at "1" through an AND gate 19. As will be described later, the operation is intended to generate two inphase pulses (of "+1" and "−1") at this point of time (refer to Figure 3). Simultaneously therewith, "1" is applied to the first stage 21-1 and fifth stage 21-5 of a shift register 21 (which is constructed of five stages of flip-flop circuits 21-1 to 21-5 and in which the logical sum (OR) between the output of the fourth stage and that of the NOR gate 17 is applied to the input of the fifth stage through an OR gate 22). The operation is intended to generate two antiphase pulses (of "+1" and "−1") at this point of time (refer to Figure 3). Letters $k$, $l$, $m$, $n$ and $o$ in Figure 5 show the output waveforms of the respective stages of the shift register 21. The clock $t_1$ of an AND gate 20 is inhibited by the waveform $a_6$, to obtain a train of pulses $q$ (thus, inphase pulses are obtained as stated below). In addition, when the output $o$ of the fifth stage 21-5 of the register 21 is used to inhibit the clock pulse $t_2$ to be impressed on an input terminal 23, a train of pulses $p$ is obtained (thus, antiphase pulses can be obtained). The trains of pulses $p$ and $q$ are combined by an OR gate 24 into a train of pulses $r$, which is applied to a T-type flip-flop 25 as a trigger signal. Accordingly, the zero-substituted two-level AMI signal b' shown in Figure 3 is provided from the output terminal 26 of the T-type flip-flop 25. A pulse expander 27 in Figure 4 expands the output of the fourth stage of the shift register 21 as indicated by a dotted line in the waveform $n$ of Figure 5. This serves for securing the last point of time of the 6-bit violation in order to prevent the next pulse $j$ for zero succession detection (a part indicated by a dotted line) from arising earlier.

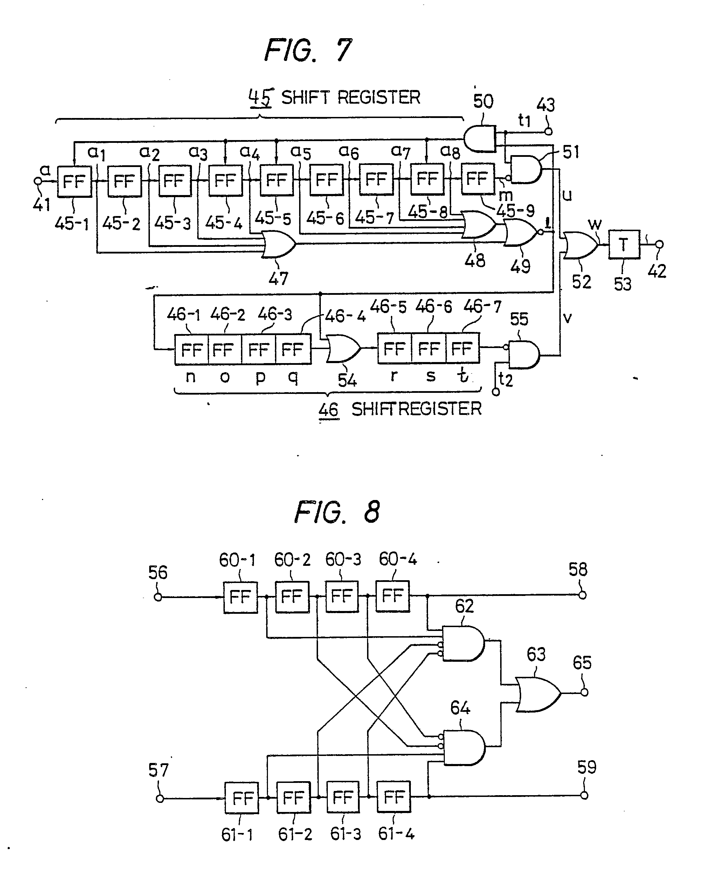

Figure 6 is a circuit diagram showing the arrangement of an embodiment of the zero substitution remover 9 in the receiving part. It is a circuit corresponding to a case where the two-level AMI signal $s$ produced by the embodiment of Figure 4 has been received as an input signal.

As shown at $e$ in Figure 3, the duobinary shaped signal (e) is a pulse train of the three levels of "+1", "0" and "−1". In order to handle the signal $e$ by means of logic circuitry for processing two-level signals, it is divided into a pulse train (hereinbelow, called the "P pulse train") wherein only the pulses of "+1" in the signal $e$ are denoted as "1" and the others (of "0" and "−1") as "0", and a pulse train (hereinbelow, called the "N pulse train") wherein only the pulses of "−1" in the signal $e$ are denoted as "1" and the others (of "0" and "+1") as "0" (the division is effected by the decision circuit 7 in Figure 1). The P pulse train and the N pulse train are respectively applied to the input terminals 29 and 30 of shift registers 27 and 28.

In the case where the duobinary shaped signal is the signal shown at $e$ in Figure 3, the regenerated pulse train of the zero substitution part becomes "$\phi_+$, $\phi_+$, 1, −1, $\phi_-$, $\phi_-$" as stated before. In a case where the zero substitution part has been received in the first to sixth stages of the shift register, $\phi_+$ is either "+1" or "0", and $\phi_-$ is either "−1" or "0". Therefore, regarding the N pulse train, the first, second and third stages of the shift register 29 become "0" necessarily, and the fourth stage becomes "1" necessarily. Regarding the P pulse train, the third stage becomes "1" necessarily, and the fourth, fifth and sixth stages become "0" necessarily.

The pulse train "$\phi_+$, $\phi_+$, 1, −1, $\phi_-$, $\phi_-$" can accordingly be decided to be the signal based on the zero substitution, by logic processing as stated below. The logical sum (OR) of the outputs of the fifth and sixth stages of flip-flop circuits 27-5 and 27-6 of the shift register 27 and those of the first and second stages of flip-flop circuits 28-1 and 28-2 of the shift register 28, totaling four outputs, is found. When it is "0", there is the possibility that $\phi_+$ and $\phi_-$ based on the violation have arisen. A NOR gate 31 accordingly provides "1" with the above logical sum inverted, in correspondance with the violation part. This signal is used as an antiphase pulse detection signal, and "1" indicates the possibility of the occurrence of $\phi_+$ and $\phi_-$. On the other hand, the logical sum (AND) between the output of the third stage of flip-flop circuit 27-3 of the shift register 27 and that of the fourth stage of flip-flop circuit 28-4 of the shift register 28 is found. When it is "1", there is the possibility that the inphase pulses "1" and "−1" have arisen in the violation. This signal is used as an inphase pulse detection signal.

In a case where both the inphase pulse detection signal and the antiphase pulse detection signal are "1", the possibility of the occurrence of the violation is high, but the original information signal might include the same pattern. In order to discern them, therefore, it is detected whether the preceding pulse is of "1" or the zero substitution has already preceded and been removed. In order to acknowledge that the preceding pulse corresponds to the original information "1", the output of the seventh stage 27-7 of the shift register 27 may be checked. Further, in order to acknowledge that the zero substitution has preceded, the zero substitution detection pulse may be stored in a shift register 35 (constructed of six stages) in advance, and it may be checked. Accordingly, the logical sum between the outputs of the shift register 35 and the seventh stage 27-7 of the shift register 27 is obtained by means of an OR gate 33. The output of the OR gate 33 shall be called the "preceding state acknowledgement signal".

Thus, it is found by an AND gate 32 that the inphase pulse and antiphase pulse detection signals are "1" and that the preceding state acknowledgement signal is also "1". When the result is "1", the zero substitution is decided. At this time at which the output of the AND gate 32 is "1", the violation is removed by resetting the first to sixth stages of flip-flops of the shift registers 27 and 28 through an OR gate 34. Accordingly, a regenerated signal restored to the original information "0's" is delivered from each of output terminals 39 and 40.

In Figure 6, a NOR gate 36, an AND gate 37 and an OR gate 38 have not been explained. These form an arrangement for a case where the signal of the violation is "$\phi_-, \phi_-, -1, +1, \phi_+, \phi_+$". Since they can remove the violation by quite similar operations to the foregoing, the detailed description of the respective parts shall be omitted.

Figures 7 and 8 show circuit diagrams of other embodiments of the code converter in the transmitting part and the zero substitution remover in the receiving part in another embodiment of the code transmission system according to the present invention, respectively.

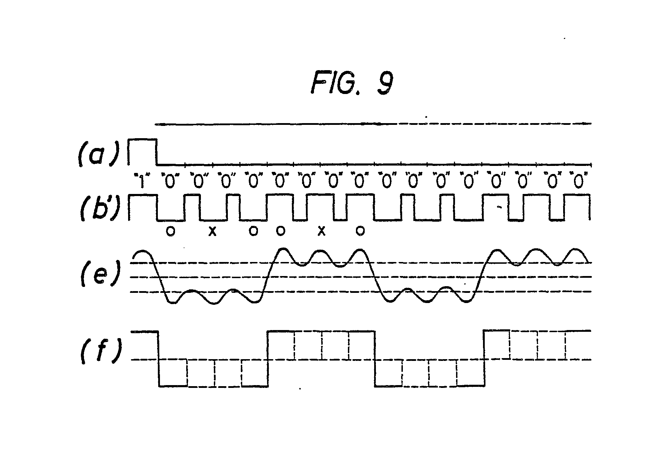

When, in case of a very long succession of "0's" in the original information, a code error has developed even in one inphase pulse in the course of the occurrence of several zero substitutions, the zero substitution fails to be detected as such, and the zero substitution detection signal is not supplied for the ensuing zero substitution detection. Therefore, all the zero substitution detection operations fail since this point of time. That is, the propagation of the code error takes place. The present embodiment prevents such propagation of the code error. Before the explanation of the embodiment, the principle will be described with reference to Figure 9.

There will be mentioned an example wherein a "0" succession part of 8 bits is subjected to the zero substitution when "0's" succeed long in the original information. The zero substitution is performed so that the first, fourth, fifth and eighth bits may become inphase pulses and that antiphase pulses may arise between the second and third bits and between the sixth and seventh bits. The corresponding received signal becomes as shown at $e$ due to the band limitation of a transmission line. When such signal is discriminated and regenerated, a signal $f$ is obtained. As understood from the figure, even when all undefined pulses indicated by dotted lines have become zero, there arises a signal which differs from a duobinary shaped signal in the case where the AMI signal is normal within the zero substitution. More specifically, in the normal duobinary shaped signal, "+1" and "−1" arise alternately without fail. In contrast, in the regenerated signal resulting from the zero substitution, "+1" and "−1" do not alternately arise irrespective of the values of the undefined pulses. When this property is utilized, the preceding state acknowledgement signal is dispensed with. That is, since the violation conforming with the AMI rules is contained within one section of the zero substitution, the zero substitution can be detected without checking the preceding state.

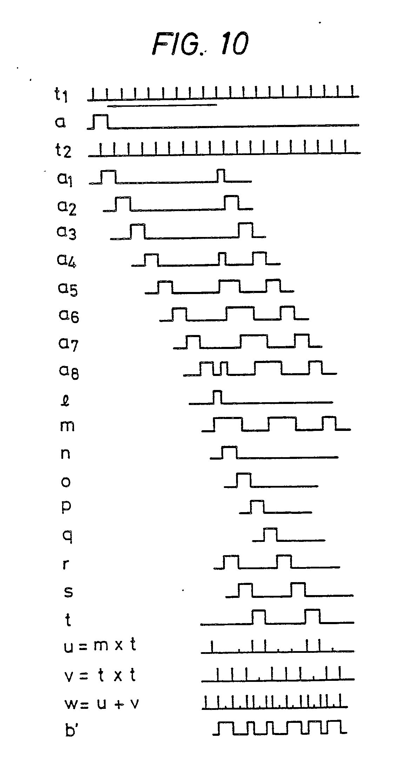

The arrangement and operation of the embodiment in Figure 7 will be described with reference to a time chart in Figure 10. The original information signal $a$ (the same as that shown at $a$ in Figure 9) is applied to the input end 41 of a shift register 45, which has nine stages of flip-flops (45-1 to 45-9) connected in series, in synchronism with a timing signal $t_2$ of a period T. With the lapse of time, the outputs of the respective stages of the shift register 45 become as shown at $a_1$—$a_8$ in Figure 10. OR gates 47, 48 and a NOR gate 49 are used for detecting the succession of eight "0's" which are the outputs of the respective stages ($l$). When, after the provision of this signal $l$, a clock $t_1$ having a period T and delayed by T/2 with respect to the clock $t_2$ has arrived at an input terminal 43, it sets the first, fourth, fifth and eighth stages of the shift register 45 through an AND gate 50. At the same time, $l$="1" is applied to the first stage 46-1 and fifth stage 46-5 of a shift register 46 (through an OR gate 54). The outputs of the respective stages of the shift register 46 become as shown at $n, o, p, q, r, s$ and $t$ in Figure 10. The clock $t_1$ impressed on an AND gate 51 is inhibited by the output $m$ of the ninth stage 45-9 of the shift register 45, and a train of pulses $u$ results. The clock $t_2$ impressed on an AND gate 55 is inhibited by the output $t$ of the seventh stage 46-7 of the shift register 46, and a train of pulses $v$ results. Thus, an OR gate 52 takes the logical sum between the pulse trains $u$ and $v$ and provides a train of pulses $w$, with which a T-type flip-flop 53 is triggered. Then, the pulses b' (the same as those b' in Figure 9) resulting from the zero substitution of the two-level AMI signal are obtained.

Figure 8 shows the arrangement of one embodiment of the circuit for detecting and removing the zero substitution from the two-level AMI signal which has been obtained by the embodiment of Figure 7 and which contains the zero substitution. The decision circuit 7 in Figure 1 converts the signal of the three levels of "+1", "0" and "−1", which is the duobinary shaped signal (e) or (f) in Figure 9, into a train of pulses (P pulse train) wherein the pulse of "+1" is made "1" and the others ("0" and "−1") are made "0", and a train of pulses (N pulse train) wherein only the pulse of "−1" is made "1" and the others ("0" and "+1") are made "0". Then, it applies the P pulse train and the N pulse train to input terminals 56 and 57 in Figure 8, respectively. When the zero substitution as shown at (b') in Figure 9 has been executed, the P and N pulses of the signal $e$ become "0 0 0 0 1 $\phi_+$ $\phi_+$ 1" and "1 $\phi_-$ $\phi_-$ 1 0 0 0 0" respectively. Thus, there are disposed an AND gate 62 which receives the outputs of the first and fourth stages 60-1, 60-4 of a shift register 60 and the inverted signals of the outputs of the second and third stages 61-2, 61-3 of a shift register 61, and an AND gate 64 which receives the inverted signals of the output of the second and third stages 60-2, 60-3 of the shift register 60 and the outputs of the first and fourth stages 61-1, 61-4 of the shift register 61. The outputs of the respective AND gates are applied to an OR gate 63. Then, only when the zero substitution has arisen, a pulse is provided from an output terminal 65. When, upon the provision of this output, the respective stages of the shift registers 60 and 61 are reset, outputs restored to the succession of "0's" of the original information are provided from output terminals 58 and 59. In this manner, the zero substitution removal is effected in 4-bit unit on the receiving side. In the duobinary shaped signal of the normal two-level AMI signal which has not been subjected to the zero substitution, "−1" arises between "1' and "1" necessarily. Therefore, "1" is not provided from the OR gate 65 in Figure 8.

As described above in connection with the embodiments, according to the present invention, the execution of zero substitution is permitted in case of performing the duobinary shaping of a two-level AMI signal. Even when "0's" succeed in original information, the extraction of a timing signal and the AGC are facilitated, and besides, a zero substitution part in the case of executing the zero substitution including violation can be properly detected.

**Claims**

1. In a code signal transmission system having a transmitting part which converts "1" of an original information signal into "11" or "00" and "0" into "01" or "10", or "1" into "10" or "01" and "0" into "11" or "00", in a manner that polarities of pulses are alternately inverted, and which delivers the converted signal to a transmission line, and a receiving part which subjects a reception signal received from the transmission line, to duobinary shaping and which regenerates the original signal from a duobinary shaped signal of three levels of "+1", "0" and "−1", a method for pulse signal transmission characterized in that in this transmitting part when "0" (or "1's") have succeeded over a fixed bit length in the original information signal, the original information signal is converted into pulses containing "11" or "00" inphase with or antiphase to "0" (or "1") thereof, so that a number of the inphase pulses may become equal or larger than the number of the antiphase pulses and so that when both are equal, the number of the inphase pulses adjacent to each other may become larger than the number of the antiphase pulses adjacent to each other, and that in the received pulses the zero substitution part from the inphase or antiphase pulse arrayal of the duobinary shaped signal is detected and the part subjected to the zero substitution is converted into "0's".

2. A method for pulse signal transmission according to claim 1, characterized in that said zero substitution is performed every fixed number of successive "0's" of the original information, said fixed number being at least six.

3. A method for pulse signal transmission according to claim 1 or claim 2, characterized in that only the "+1" signal part of said duobinary shaped signal is turned to "1" and said "0" and "−1" part is turned into "0", secondly only "−1" is turned into "1" and "+1" and "0" is turned into "0" and a signal is generated only at the time of the signal of the zero substitution so that in detecting the zero substitution, a pulse undefined as to "0" and "−1" is provided as "0" and a pulse undefined as to "+1" and "0" is provided as "0".

4. In a code signal transmission system having a transmitting part which converts "1" of an original information signal into "11" or "00" and "0" into "01" or "10", or "1" into "10" or "01" and "0" into "11" or "00", in a manner that polarities of pulses are alternately inverted, and which delivers the converted signal to a transmission line, and a receiving part which subjects a reception signal received from the transmission line, to duobinary shaping and which regenerates the original signal from a duobinary shaped signal of three levels of "+1", "0" and "−1"; a pulse signal transmission system characterized in that said transmitting part (A) includes a zero substitution imparter (4) by which, when "0's" (or "1's") have succeeded over a fixed bit length in the original information signal, the orginal information signal is converted into pulses containing "11" or "00" inphase with or antiphase to "0" (or "1") thereof, and that said receiving part (B) is constructed of a detector circuit (7) which detects the zero substitution part from the inphase or antiphase pulse arrayal of the duobinary shaped signal of said zero substitution part, and a code converter (12) which converts the part subjected to the zero substitution, into "0's" by the use of the output of said detector circuit (7), and said zero substitution imparter (4) is a circuit which performs the signal conversion so that the number of the inphase pulses may become equal to or larger than the number of the antiphase pulses, and that when both are equal, the number of the inphase pulses adjacent to each other may become larger than the number of the antiphase pulses adjacent to each other.

5. A pulse signal transmission system as defined in claim 4, characterized in that said zero substitution imparter (4) is a circuit which performs the zero substitution every fixed number of successive "0's" of the original information, said fixed number being at least six.

6. A pulse signal transmission system as defined in claim 4 or claim 5, characterized in that the zero substitution detecting circuit (7) of said receiving part (B) includes a first circuit which turns only "+1" of said duobinary shaped signal into "1" and turns "0" and "−1" into "0", a second circuit which turns only "−1" into "1" and turns "+1" and "0" into "0", and a third circuit which generates a signal only at the time of the signal of the zero substitution on the basis of the outputs of said first and second circuits, so that in detecting the zero substitution, a pulse undefined as to "0" and "−1" is provided as "0" from said first circuit, while a pulse undefined as to "+1" and "0" is provided as "0" from said second circuit.

**Patentansprüche**

1. Verfahren zur Impulssignalübertragung in einem Codesignalübertragungssystem mit einem Sender, der eine "1" eines Ursprungsinformationssignals in "1" oder "00" und eine "0" in "01" oder "10", oder eine "1" in "10" oder "01" und eine "0" in "11" oder "00" in einer Weise umsetzt, daß die Impulspolaritäten abwechselnd invertiert werden und der das umgesetzte Signal in eine Übertragungsleitung einspeist und mit einem Empfänger, in dem das von der Übertragungsleitung empfangene Signal einer duobinären Formung unterworfen wird und das Ursprungssignal von einem duobinär geformten Signal mit drei Pegeln "+1", "0" und "−1" regeneriert wird, dadurch gekennzeichnet, daß in diesem Sender das Ursprungsinformationssignal, wenn in diesem Nullen ("0") oder Einsen ("1") über eine feste Bitlänge aufeinanderfolgen, in Impulse umgesetzt wird, die "11" oder "00" jeweils in Phase oder gegenphasig zu den Nullen ("0") oder Einsen ("1") im Ursprungsinformationssignal lauten, wobei die Anzahl der gleichphasigen Impulse gleich oder größer als die Anzahl der gegenphasigen Impulse werden kann, und wobei, wenn beide Anzahlen gleich sind, die Anzahl der benachbarten gleichphasigen Impulse größer werden kann als die Anzahl der einander benachbarten gegenphasigen Impulse, und daß der Nullsubstitutionsteil in den empfangenen Pulsen aus den gleichphasigen oder gegenphasigen Impulsreihen des duobinär geformten Signals erfaßt und der der Nullsubstitution unterworfene Teil in Nullen ("0") umgesetzt wird.

2. Verfahren zur Impulssignalübertragung nach Anspruch 1, dadurch gekennzeichnet, daß die Nullsubstitution jeweils auf eine feste Anzahl aufeinanderfolgender Nullen ("0") der Ursprungsinformation durchgeführt wird, wobei diese feste Anzahl mindestens sechs ist.

3. Verfahren zur Impulssignalübertragung nach Anspruch 1 oder 2, dadurch gekennzeichnet, daß der "+1" Signalteil des duobinär geformten Signals in "1" umgesetzt und der "0" und "−1" Teil in "0", sowie "−1" in "1" umgesetzt und "+1" und "0" in "0" umgesetzt werden und ein Signal nur zum Zeitpunkt des Signals der Nullsubstitution so erzeugt wird, daß beim Erfassen der Nullsubstitution, ein bezüglich "0" und "−1" undefinierter Impuls eine "0" und ein bezüglich "+1" und "0" undefinierter Impuls eine "0" ergibt.

4. Impulssignalübertragungssystem in einem Codesignalübertragungssystem, das einen Sender, das eine "1" eines Ursprungsinformationssignals in "11' oder "00" und eine "0" in "01" oder "10" umsetzt, oder eine "1" ind "10" oder "01" und eine "0" in "11" oder "00" umsetzt, so daß die Impulspolaritäten abwechselnd invertiert werden und das das umgesetzte Signal in einer Übertragungsleitung einspeist und einen Empfänger aufweist, der ein von der Übertragungsleitung empfangenes Signal duobinär formt und das Ursprungssignal aus dem duobinär geformten Signal, das drei Pegel "+1", "0" und "−1" hat, regeneriert, dadurch gekennzeichnet, daß der Empfanger (A) einen Nullsubstitutionsgeber (4) enthält, der das Ursprungsinformationssignal, wenn in diesem Nullen ("0") oder Einsen ("1") über eine feste Bitlänge aufeinanderfolgen, in Impulse umsetzt, die "11" oder "00" gleichphasig oder gegenphasig zu den Nullen ("0") oder Einsen ("1") im Ursprungsinformationssignal enthalten und weiterhin aus einer Detektorschaltung (7), die den Nullsubstitutionsteil aus der gleichphasigen oder gegenphasigen Impulsreihe des duobinär geformten Signals des Nullsubstitutionsteils erfaßt und einem Codewandler (12) besteht, der den der Nullsubstitution unterworfenen Teil mittels des Ausgangs der Detektorschaltung (7) in Nullen ("0") umsetzt, und der Nullsubstitutionsgeber (4) eine Schaltung darstellt, die die Signalumsetzung so durchführt, daß die Anzahl der gleichphasigen Impulse gleich oder größer als die Anzahl der gegenphasigen Impulse werden kann, wobei, wenn beide gleich sind, die Anzahl der einander benachbarten gleichphasigen Impulse größer werden kann als die Anzahl der einander benachbarten gegenphasigen Impulse.

5. Impulssignalübertragungssystem nach Anspruch 4, dadurch gekennzeichnet, daß der Nullsubstitutionsgeber (4) eine Schaltung darstellt, die jeweils nach einer festen Anzahl aufeinanderfolgender Nullen ("0") in dem Ursprungsinformationssignal die Nullsubstitution durchführt, wobei die feste Anzahl mindestens sechs beträgt.

6. Impulssignalübertragungssystem nach Anspruch 4 oder 5, dadurch gekennzeichnet, daß die Nullsubstitutionsdetektorschaltung (7) des Empfangers (B) eine erste Schaltung, die "+1" des duobinär geformten Signals in "1" umsetzt und "0" und "−1" in "0" kehrt, eine zweite Schaltung, die nur "−1" in "1" umsetzt und "+1" und "0" in "0" kehrt, und eine dritte Schaltung enthält, die ein Signal nur zum Zeitpunkt des Signals der Nullsubstitution aufgrund der Ausgänge der ersten und der zweiten Schaltung erzeugt, so daß beim Erfassen der Nullsubstitution ein bezüglich "0" und "−1" undefinierter Impuls von der ersten Schaltung als "0" und ein bezüglich "+1" und "0" undefinierter Impuls von der zweiten Schaltung als "0" geliefert wird.

**Revendications**

1. Dans un système de transmission de signaux codés incluant une partie d'émission qui transforme le "1" d'un signal d'information initial en "11" ou "00" et le "0" en "01" ou "10", ou le "1" en "10" ou "01" et le "0" en "11" ou "00", de sorte que les polarités des impulsions sont inversées d'une manière alternée, et qui délivre le signal transformé à une ligne de transmission, et une partie de réception qui soumet un signal de réception reçu de la part de la ligne de transmission à une mise en forme duobinaire et qui régénère le signal initial à partir d'un signal sous forme duobinaire présentant les trois niveaux "+1", "0" et "−1", un procédé pour la transmission de signaux impulsionnels caractérisé en ce que dans la partie de transmission, lorsque des "0" (ou des "1") se sont succédés pendant une longueur fixée de bits dans le signal d'information initial, ce signal d'information initial est transformé en impulsions contenant des "11" ou "00" en phase ou en opposition de phase avec des "0" (ou des "1") de sorte que l'on peut rendre le nombre des impulsions en phase égal ou supérieur au nombre des impulsions en opposition de phase et que, lorsque ces deux nombres sont égaux, le nombre des impulsions en phase voisines les unes des autres peut devenir égal au nombre des impulsions en opposition de phase voisines les unes des autres, et que dans les impulsions reçues, la partie de substitution de zérosprovenant de l'ensemble des impulsions en phase ou en opposition de phase du signal sous forme duobinaire est détectée et que la partie soumise à la substitution de zérosest convertie en des "0".

2. Procédé pour réaliser la transmission de signaux impulsionnels selon la revendication 1, caractérisé en ce que ladite substitution de zéros est exécutée pour un nombre fixe de "0" successifs de l'information initiale, ledit nombre fixe étant égal au moins à six.

3. Procédé pour réaliser la transmission de signaux impulsionnels selon la revendication 1 ou 2, caractérisé en ce que seule la partie "+1" dudit signal mis sous forme duobinaire est transformée en "1", et que ladite partie "0" et "1" est transformée en "0", qu'en second lieu seulement "−1" est transformé en "1" et que "+1" et "0" sont transformés en "0", et qu'un signal est produit uniquement au moment du signal de la substitution de zéros, de sorte que lors de la détection de la substitution de zéros, une impulsion indéfinie étant "0" ou "−1" est délivrée en tant que "0" et une impulsion indéfinie en tant que "+1" et "0" est délivrée en tant que "0".

4. Dans un système de transmission de signaux codés incluant une partie d'émission qui transforme le "1" d'un signal ou le "1" en "10" ou "01" et le "0" en "11" ou "00", de manière que les polarités des impulsions soient inversées d'une manière alternée, et qui délivre le signal transformé à une ligne de transmission, et une partie de réception qui soumet un signal de réception reçu de la part de la ligne de transmission à une mise en forme duobinaire et qui régénère le signal initial à partir d'un signal sous forme duobinaire présentant les trois niveaux "+1", "0" et "−1"; un système de transmission de signaux impulsionnels caractérisé en ce que ladite partie d'émission (A) comporte un dispositif de substitution de zéros (4) grâce auquel, lorsque des "0" (ou des "1") se sont succédés pendant une longueur fixe de bits dans le signal d'information initial, ce signal d'information initial est transformé an impulsions contenant "11" ou "00" en phase ou en opposition de phase avec "0" (ou "1") dudit signal, et que ladite partie de réception (B) comporte un circuit détecteur (16) qui détecte la partie de substitution de zéros à partir de l'ensemble des impulsions en phase ou en opposition de phase du signal de forme duobinaire de ladite partie de substitution de zéros, et un convertisseur de code (12) qui transforme la partie soumise à la substitution de zéros en des "0", grâce à l'utilisation du signal de sortie dudit circuit détecteur (7), et que ledit dispositif de substitution de zéros (4) est un circuit qui réalise la conversion du signal de sorte que le nombre des impulsions en phase peut devenir égal ou supérieur au nombre des impulsions en opposition de phase, et que lorsque ces deux nombres sont égaux, le nombre des impulsions en phase voisines les unes des autres peut devenir supérieur au nombre des impulsions en opposition de phase voisines les unes des autres.

5. Système de transmission de signaux impulsionnels selon la revendication 4, caractérisé en ce que ledit dispositif de substitution de zéros (15) est un circuit qui réalise la substitution de zéros pour un nombre fixé de "0" successifs de l'information initiale, ledit nombre fixe étant au moins égal à six.

6. Système de transmission de signaux impulsionnels selon la revendication 4 ou 5, caractérisé en ce que le circuit (7) de détection de substitutions de zéros de ladite partie de réception (B) inclut un premier circuit qui transforme seulement "+1" dudit signal de forme duobinaire en un "1" et transforme "0" et "−1" en "0", un second circuit qui transforme uniquement "−1" en "1" et transforme "+1" et "0" en "0", et un troisième circuit qui produit un signal uniquement au moment du signal de la substitution de zéros sur la base des sorties des premier et second circuits, de sorte que lors de la détection de la substitution de zéros, une impulsion indéfinie telle que "0" et "−1" est délivrée en tant que "0" par ledit premier circuit, tandis qu'une impulsion indéfinie en tant que "+1" et "0" est délivrée en tant que "0" par ledit second circuit.

# FIG. 1

# FIG. 2

(a)

"0" "0" "1" "0" "1" "1" "0" "0" "0" "0" "1" "0" "0"

(b)

(c)

(d)

TIME —

# FIG. 3

"1" "0" "0" "0" "0" "0" "0"

(a)

(b')

x   o   o   x

T1  T2  T3  T4  T5  T6  T7

(d')

(e)

Δt

(f)

t1  t2  t3  t4  t5  t6  t7

(g)

"1"  "1"  "1"  "1"  ≐1"  "0"  "0"
     "0"  "0"              ≐1"  ≐1"

TIME —

# FIG. 4

## 13 SHIFT REGISTER

# FIG. 6

## 27 SHIFT REGISTER

28 SHIFT REGISTER

# FIG. 5

TIME ⟶

## FIG. 7

## FIG. 8

5

## FIG. 9

## FIG. 10

t1

a

t2

a1

a2

a3

a4

a5

a6

a7

a8

l

m

n

o

p

q

r

s

t

u = m x t

v = t x t

w = u + v

b'